(19) Europäisches Patentamt

European Patent Office

Office européen des brevets

(11) **EP 3 944 137 A1**

(12) **EUROPEAN PATENT APPLICATION**

(43) Date of publication:
26.01.2022 Bulletin 2022/04

(21) Application number: 21185653.9

(22) Date of filing: 14.07.2021

(51) International Patent Classification (IPC):
*G06K 9/00* (2022.01) *G06K 9/62* (2022.01)
*G01S 17/89* (2020.01) *G06T 17/00* (2006.01)

(52) Cooperative Patent Classification (CPC):
G06K 9/00791; G01S 7/4802; G01S 17/89;
G06K 9/6215; G06K 9/622; G06T 17/005

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 20.07.2020 CN 202010698905

(71) Applicant: **Bayerische Motoren Werke
Aktiengesellschaft
80809 München (DE)**

(72) Inventor: **Moltrecht, Lennart
Shanghai 200000 (CN)**

(54) **POSITIONING METHOD AND POSITIONING APPARATUS**

(57) The present disclosure relates to a positioning method and a positioning apparatus. A positioning method including: performing clustering on sensing data on an environment near an object to be located so that at least one first object is identified; generating a probability distribution model for each of the first object according to the sensing data; determining a feature corresponding to the at least one first object according to the sensing data; obtaining a search tree, wherein a property of a node of the search tree includes a feature of at least one second object near the object to be located, and the feature of the at least one second object is generated based on a map data; determining a third object from the at least one second object corresponding to the at least one first object according to the search tree; and determining a position of the object to be positioned according to the third object.

EP 3 944 137 A1

**Description**

TECHNICAL FIELD

The present disclosure relates to a positioning method and a positioning apparatus

BACKGROUND TECHNOLOGY

With the advancement of chip technology and artificial intelligence technology, auto-driving technology has become the focus of attention again. One of the most important technologies in auto-driving technology is the positioning of the objects to be located, such as vehicles or robots. In prior art, the positioning technology based on communication base station, satellite, etc. cannot provide enough precision for automatic driving. Therefore, a technology that can accurately determine the position of the object to be located is needed.

SUMMARY OF THE INVENTION

In accordance with one aspect of the present disclosure, there is provided a positioning method, including:

performing clustering on sensing data on an environment near an object to be located so that at least one first object is identified;
generating a probability distribution model for each of the first object according to the sensing data;
determining a feature corresponding to the at least one first object according to the sensing data;
obtaining a search tree, wherein a property of a node of the search tree includes a feature of at least one second object near the object to be located, and the feature of the at least one second object is generated based on a map data;
determining a third object corresponding to the at least one first object from the at least one second object according to the search tree; and
determining a position of the object to be located according to the third object.

In accordance with another aspect of the present disclosure, there is provided a positioning apparatus, including a memory and a processor, wherein instructions are stored on the memory, when the instructions are executed by the processor, steps of the positioning method according to the present disclosure are implemented.
In accordance with a further aspect of the present disclosure, there is provided a positioning apparatus, including an object identifying unit, configured to perform clustering on sensing data of an environment near an object to be located to identify at least one first object;
a unit for generating a probability distribution model, configured to generate a probability distribution model for each of the first object according to the sensing data;
a feature determining unit, configured to determine a feature corresponding to the at least one first object according to the sensing data;
a search tree obtaining unit, configured to obtain a search tree, wherein a property of a node of the search tree includes a feature of at least one second object near the object to be located, and the feature of the at least one second object is generated based on a map data;
a searching unit, configured to determine a third object corresponding to the at least one first object from the at least one second object according to the search tree; and
a locating unit, configured to determining a position of the object to be located according to the third obj ect.
In accordance with a still further aspect of the present disclosure, there is provided a vehicle, comprising the positioning apparatus according to the present disclosure.
In accordance with a still further aspect of the present disclosure, there is provided a non-transient computer readable storage medium with instructions stored thereon, when the instructions are executed, the steps of the positioning method according to the present disclosure are implemented.
Other features and advantages of the present disclosure will become clearer through a detailed description of the exemplary embodiments of the present disclosure with reference to the drawings.

BRIEF DESCRIPTION OF THE DRAWINGS

The appended drawings, which form part of the specification, describe the embodiments of the present disclosure and, together with the specification, are used to explain the principles of the present disclosure.
Referring to the appended drawings, this disclosure can be more clearly understood in accordance with the detailed description below, where:

Fig. 1 is a flowchart of the positioning method according to an embodiment of the present disclosure.

Fig. 2 is a schematic diagram of an actual road.

Fig. 3 is a schematic diagram of a point cloud obtained by a lidar scanning the environment around a vehicle.

Fig. 4 is a schematic diagram of using a Gaussian mixture model to represent the clusters in the point cloud.

Fig. 5 is a schematic diagram of a search tree according to an embodiment of the present disclosure.

Fig. 6 is a schematic diagram of a positioning apparatus 600 according to an embodiment of the present disclosure.

Fig. 7 is a block diagram of a computing device according to an exemplary embodiment of the present disclosure.

Fig. 8 is a schematic diagram of a search tree according to an embodiment of the present disclosure.

Fig. 9 is a schematic diagram of a search tree according to an embodiment of the present disclosure.

Note that in the embodiments of the following descriptions, sometimes the same reference numeral is used among different drawings to represent the same component or the components with a similar function, while omitting the repeated descriptions. In some cases, similar numbers and letters are used to represent similar items, so once an item is defined in one of the drawings, no further discussion of it is required in subsequent drawings.

For ease of understanding, the positions, dimensions, and extents of the structures shown in the drawings, etc. sometimes do not represent actual positions, dimensions, extents, etc. Therefore, this disclosure is not limited to the positions, dimensions, and extents disclosed in the drawings, etc.

DETAILED DESCRIPTIONS

Various exemplary embodiments of the present disclosure will be described in detail below with reference to the drawings. It should be noted that the relative arrangement, numerical expressions and values of the parts and steps described in these embodiments do not limit the scope of the present disclosure unless otherwise specified.

The following description of at least one exemplary embodiment of the present invention is in fact merely illustrative and in no way restricts the disclosure and its application or use. That is, the structures and methods in this disclosure are illustrated in an example way to illustrate different embodiments of the structures and methods in this disclosure. However, a person skilled in the art will understand that they are merely illustrative of the exemplary ways in which the disclosure can be implemented, not exhaustive. In addition, the drawings do not have to be provided in proportion, and some features may be enlarged to show the details of specific components.

Technology, methods and devices known to a person skilled in the art may not be discussed in detail, but where appropriate, the said technology, methods and devices should be considered as part of the specification.

In all the examples shown and discussed herein, any specific value should be interpreted as merely an example, not as a limitation. Therefore, other examples of the exemplary embodiments may have different values.

Currently, a variety of maps are used in auto-driving technology to determine a position of an object to be located. For example, the map may be a point map consisting of laser points, a raster map dividing the environment into a raster (each raster cell records whether it is occupied and occupancy probability), a geometric primitive map that uses one or more geometric primitives to represent entities in the environment, a feature map consists of feature points and corresponding descriptors extracted from other types of data (such as point clouds, camera images, and so on), a normal distribution transformation map where the environment is represented by a single weighted Gaussian mixture model and each Gaussian distribution simulates a unique raster cell of the environment. In the normal distribution transformation map, the environment is divided into raster, the Gaussian distribution is calculated between data points within each raster cell, and the weight of the Gaussian distribution is maintained to represent the occupancy probability of the cell.

In the process of auto-driving of a vehicle, for example, the vehicle needs to be maneuvered according to the vehicle's current position, which requires locating the vehicle in real-time.

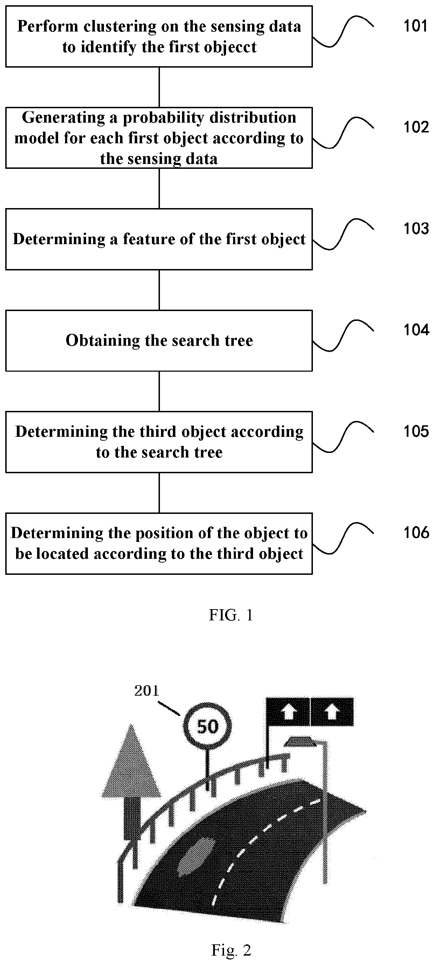

Fig. 1 shows a flowchart of the positioning method according to some embodiments of the present disclosure. As shown in Fig. 1, the positioning method for determining the location of the object to be located mainly consists of the following steps:

performing clustering on sensing data on an environment near an object to be located so that at least one first object is identified (step 101);

generating a probability distribution model for each of the first object according to the sensing data (step 102);

determining a feature corresponding to the at least one first object according to the sensing data (step 103);

obtaining a search tree, wherein a property of a node of the search tree includes a feature of at least one second object near the object to be located, and the feature of the at least one second object is generated based on a map data (step 104);

determining a third object from the at least one second object corresponding to the at least one first object according to the search tree (step 105); and

determining a position of the object to be located according to the third object (step 106).

Detailed steps of the positioning method according to the present disclosure are described and explained below in conjunction with specific examples.

First, clustering is performed on sensing data on an environment near an object to be located so that at least one first object is identified (step 101).

During the locating of an objected to be located (such as a vehicle, robot, etc.), the environment around the object to be located may be sensed through environment sensors on the object to be located. For example, lidar can be used to scan the surrounding environment of the object to be located to acquire a point cloud of the surrounding environment; or camera(s) may be adopted to capture pictures (point cloud) of the surrounding environment.

The point cloud is a collection of numerous points that characterize the surface of the target object. For example, in a point cloud acquired from the laser measurement principle (lidar), each point can include information such as three-dimensional coordinates and laser reflectivity. In a point cloud acquired from the photo measurement principle (cameras), each point can include three-dimensional coordinates and color information (such as RGB). In addition, a point cloud can be acquired from the combination of the laser and photo measurement principles, and each point can include information such as three-dimensional coordinates, laser reflectivity, and color.

Clustering of points in a point cloud is possible based on the point cloud obtained from the environmental sensors. Clustering attempts to divide the samples (points) in a dataset (point cloud) into usually disjoint subsets, with each subset called a "cluster" or "object" (that is, the first object). One of the clustering algorithms is the prototype clustering, also known as prototype-based clustering. In a prototype clustering algorithm, it is assumed that the cluster structure can be described by a set of models. Typically, in a prototype clustering algorithm, the model is initialized, and then iteratively updated to solve it. Different model representations and different solving methods will produce different algorithms. Common prototype algorithms include: K-means algorithm, Learning Vector Quantization algorithm, probability density hybrid algorithm, and so on.

Then, a probability distribution model can be generated for each cluster (that is, the first object) based on sensing data (step 102).

Common probability distribution models include Gaussian Mixture model, Poisson distribution model, Bernoulli distribution model, Laplace distribution model, etc. In the following descriptions, exemplary embodiments according to the present disclosure will be described in detail using the Gaussian mixture model as an example. It should be understood that other probability distribution models can also be used as appropriate.

The Gaussian distribution is defined as follows. For a random vector x in n-dimensional sample space, if x obeys the Gaussian distribution, its probability density function is

$$p(x) = \frac{1}{(2\pi)^{\frac{n}{2}}|\varSigma|^{\frac{1}{2}}} e^{-\frac{1}{2}(x-\mu)^T \varSigma^{-1}(x-\mu)} \qquad (1)$$

Where, $\mu$ is n-dimensional mean vector, $\varSigma$ is n×n covariance matrix. As can be seen from the equation (1), the Gaussian distribution is completely determined two parameters, i.e. the mean vector $\mu$ and the covariance matrix $\varSigma$. To clarify the relationship between the Gaussian distribution and the corresponding parameters, the probability density function of the Gaussian distribution can be expressed as $p(x|\mu,\varSigma)$.

In this way, the Gaussian mixture distribution can be defined as

$$p_M(x) = \sum_{i=1}^{k} \alpha_i \cdot p(x|\mu_i, \varSigma_i) \qquad (2)$$

The Gaussian mixture distribution consists of k mixtures, each of the mixtures corresponds to a Gaussian distribution. $\mu_i$ and $\varSigma_i$ are the parameters for the i-th Gaussian mixture. $\alpha_i > 0$ and is the corresponding "mixing factor", and $\sum_{i=1}^{k} \alpha_i = 1.$

By solving each parameter $(\alpha_i, \mu_i, \varSigma_i)|1 \le i \le k\}$ in the above Gaussian mixture distribution, the Gaussian mixture model can be obtained.

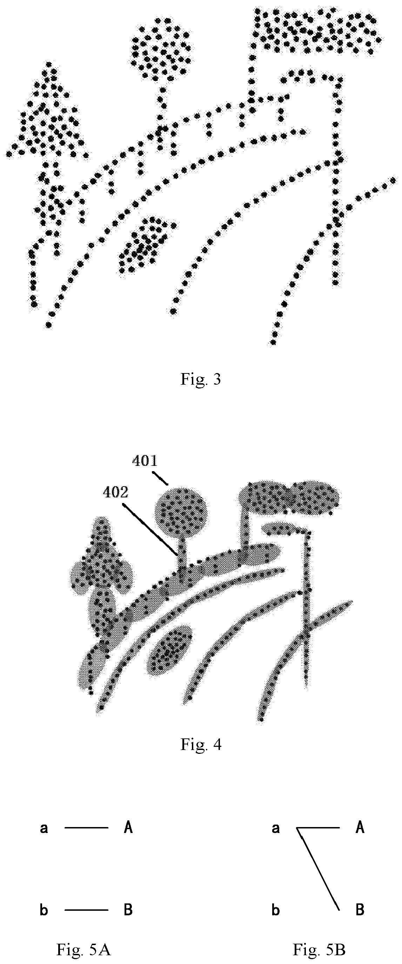

Fig. 2 shows a schematic diagram of the actual road. As shown in Fig. 2, there are trees, street lights, traffic signs, railings and other objects on both sides of the road. Fig. 3 shows a schematic diagram of a point cloud obtained by a lidar scanning the environment around the vehicle. This point cloud can also be obtained from, for example, a camera. Fig. 4 shows a schematic diagram of clusters in the point cloud using a Gaussian mixture model. As shown in Fig. 4, each cluster in the point cloud has been represented by a Gaussian mixture model.

Next, in the positioning method according to the present disclosure, features corresponding to the first objects are determined from the sensing data (step 103).

As mentioned above, points in the point cloud can be divided into one or more clusters by clustering. Each cluster can be identified as an object (the first object). As shown in Fig. 2, the speed limit plate 201 specifies a speed limit of 50 kilometers per hour. In Fig. 4, the points corresponding to the speed limit plate 201 are divided into two clusters 401 and 402. Cluster 401 corresponds to the circular portion of the speed limit plate 201, and the cluster 402 corresponds to the rod-shaped straight portion of the speed limit plate 201. That is to say, at least two first objects, cluster 401 and cluster 402, can be identified from the point cloud shown in Fig. 3.

In addition, a feature can be determined for each first object (step 103). The feature can be such as a type, a shape, a reflectivity, a flatness, a size, a color, a texture, and so on. Still as shown in Fig. 4, in some embodiments of the present disclosure, a shape can be selected as a feature of the first object. Thus, the feature of the cluster 401 is a circle, and the feature of the cluster 402 is a straight line segment. For Gaussian mixture models, the features described here can also be called signatures.

With signatures, a signature Gaussian mixture model can be generated. The signature Gaussian mixture model can include the Gaussian mixture model and the signature of the cluster (the first object) corresponding to the Gaussian mixture model.

In addition, the above features (signatures) can contain multiple attributes of the first object. For example, in an exemplary embodiment, a signature may include shape and reflectivity. In another exemplary embodiment, signatures may include shape, reflectivity, flatness, size, color, texture, and so on.

Next, in the positioning method according to the embodiment of the present disclosure, a search tree can be obtained (step 104). The properties of the node of the search tree contain the features of at least one second object near the object to be located. Wherein, the features of the second object can be generated from map data.

The search tree can be a binary tree or a multipath tree. A binary tree is a search tree in which each node can have at most two child nodes. A multipath tree (also known as a multifork tree) is a search tree with more than two child nodes.

The search tree can be generated from the map data. The map data includes precise positions of pre-measured objects (second objects). For example, the map data can be obtained from a map service provider. The map data can be pre-stored on the object to be located (such as a vehicle/robot) and read from the storage medium of the object to be located itself as needed. In addition, the object to be located can also obtain map data remotely from the map provider's server via wired or wireless networks (such as Wifi, 3G, 4G, 5G, etc.).

The map data can also be processed as described above. That is, probability distribution models can be generated from the map data. Each object (that is, the second object) and its corresponding features are identified according to the probability distribution model. In this way, a featured probability distribution model, such as a signature Gaussian mixture model, can be derived from the map data. To facilitate the search, the features of the probability distribution model can be organized into a search tree.

Fig. 8 shows a search tree according to an embodiment of the present disclosure. The search tree shown in Fig. 8 is a k-dimensional tree. The k-dimensional tree is a binary tree where each node is a k-dimensional point. That is, the property of each node in the k-dimensional tree have K components. The search tree shown in Fig. 8 is a one-dimensional tree, the property of each node has only one component (i.e., feature m). For example, the feature M can be a shape. By assigning different shapes with different values, m ranges from 0 to 10. For example, in some exemplary embodiments, m=10 is a circle, m=5 is a hexagon, m=3 is a rectangle, m=1 is a triangle, and so on. With the search tree shown in Fig. 8, the second objects can be divided into nodes of the search tree according to their features m (i.e., signatures). For example, assume the features m of seven second objects are 2, 3, 4, 5, 7, 8, 9, the second object with feature m equal to 5 is stored in node 1, the second object with feature m equal to 8 is stored in node 2, the second object with feature m equal to 3 is stored in node 3, the second object with feature m equal to 9 is stored in node 4, and the second object with feature m equal to 7 is stored in node 5, the second object with feature m equal to 4 is stored in node 6, and the second object with feature m equal to 2 is stored in node 7.

In addition, the search tree shown in Fig. 8 has three levels, the first level includes node 1, the second level includes node 2 and node 3, and the third level includes node 4 to node 7. It should be understood that the search tree can contain more or less levels, which are not limited in the present disclosure.

In some embodiments of the present disclosure, a probability distribution model can have multiple features, so the property of each node in the k-dimensional tree also has corresponding components.

Fig. 9 shows a search tree according to another embodiment of the present disclosure. The search tree is a two-dimensional tree that contains two features m and n. The feature M can be a shape with a value range of 0-10. The feature n can be a color, for example, with a value range of 0-10, and different values of feature n represent different colors.

For 15 second objects, each second object has a combination of features (m, n). According to the features m and n, the 15 second objects can be stored in nodes 1-15 of the two dimensional tree. Specifically, the feature of the second object stored in node 1 is (5,2); the feature of the second object stored in node 2 is (7,5); the feature of the second object stored in node 3 is (3,5); the feature of the second object stored in node 4 is (8,6); the feature of the second object stored in node 5 is (8,3); the feature of the second object stored in node 6 is (3,7); the feature of the second object stored in node 7 is (3,3); the feature of the second object stored in node 8 is (9,7); the feature of the second object stored in node 9 is (7,9); the feature of the second object stored in node 10 is (9,4); the feature of the second object stored in node 11 is (6,4); the feature of the second object stored in node 12 is (4,8); the feature of the second object stored in node 13 is (2,9); the feature of the second object stored in node 14 is (4,4); the feature of the second object stored in node 15 is (2,2).

In addition to the features of the probability distribution model derived from the map data, the property of each node in the search tree can also include the position and orientation of the second object. For example, for a vehicle traveling on the ground, the position information may include the coordinates of two mutually perpendicular coordinate axes on the horizontal plane, and the orientation information may include an angle between the second object and the horizontal plane. In this way, the resulting search tree generated based on the position and orientation of the second object can be a three dimensional tree.

Because the map data is usually large, search trees can be pre-generated by the map service provider and provided to the objects to be located in order to satisfy the real-time locating of the objects to be located (such as the vehicles) during high-speed driving. For example, a map service provider can pre-store all map data and search trees in the storage medium of the object to be located. In this way, the object to be located can obtain the required map data and the search tree from its own storage media at any time.

In addition, in some embodiments in accordance with the present disclosure, the object to be located has network connectivity, and the map service provider can send a part of the map data and corresponding search tree to the object to be located over the network. For example, the object to be located can receive map data and corresponding search trees within a predefined range near the current location from a map service provider, based on the current location determined by location sensors, such as satellite positioning sensors, base station positioning sensors, and so on. In this way, the search tree received by the object to be located can only include the features and/or location and/or orientation of the second object within a predetermined range. When the object to be located moves beyond the predetermined range, the updated map data and the search tree can be received from the map service provider based on the updated current location.

In addition, in some embodiments of the present disclosure, the object to be located can only obtain the map data from a map service provider, and then the object to be located generates a search tree from the map data. For example, once an object to be located receives the map data from the map service provider, the process of generating a search tree begins immediately. In some embodiments of the present disclosure, after the object to be located receives the map data, it is possible to wait until a later and appropriate time to process the map data to generate a search tree. For example, when a vehicle is driving autonomously based on old map data and the new map data received by the vehicle does not involve updates of the map data in a predetermined range around the vehicle, the generation of a new search tree can be delayed. For example, the process of generating a search tree is started when the vehicle stops. In this way, the vehicle processor can effectively handle various kinds of judgments and operations during autonomous driving, and avoid errors or traffic accidents due to the overloaded operation of the vehicle processor.

In addition, new map data may involve updates of the region around the vehicle. In some embodiments of the present disclosure, it is still possible to delay the generation of the new search tree. Usually, the map data provided by the map service providers is often updated. Even if the new map data covers the region around the vehicle, there is generally not much change. Therefore, it is still possible to accurately determine the position of the vehicle based on the old map data and the search tree. However, if it is determined that the old map data has not been updated for a long time (for example, more than two years), a new search tree can be generated immediately after receiving the new map data to avoid positioning errors. At the same time, in order to reduce the load on the vehicle processor, only a new search tree for the map data within a predefined range near the vehicle can be generated. Other new map data can wait until the vehicle stops driving before continuing to generate the corresponding new search tree.

In addition, in the description above, the "predefined range" can be a fixed range, such as a 10-kilometer area around the vehicle. In some embodiments of the present disclosure, the "predetermined range" may also be a variable value. For example, when a vehicle has a navigation device installed, the predetermined range can be determined based on the navigation information provided by the navigation device. The navigation information can include information such as starting point, ending point, passing point, planning path, and so on. Based on this information, it is possible to predict a range over which a vehicle will travel, and the range or a portion of the range can be defined as the above predefined range.

Returning to the positioning method shown in Fig. 1, once a search tree is obtained, an object (third object) of the objects (the second objects) obtained from the map data, which corresponds to the object (the first object) obtained from the sensing data, can be determined from the search tree (step 105).

As mentioned above, in some embodiments of the present disclosure, the property of the nodes of the search tree can include the position. During the search, a search area can be determined based on the position of the object to be located, and then the features of the second object similar to those of the first object are searched only within the search area. In the case of a vehicle, the current position of the vehicle can be determined based on the position sensor on the vehicle (for example, the satellite positioning sensor), and then the area within a predetermined range centered on the current position of the vehicle can be used as the search area. For example, the predetermined range can be set to a circular area with a diameter of 100, 200, or 400 meters.

In addition, in some embodiments of the present disclosure, the property of a node of the search tree can include position and orientation. During the search, a search area can be determined based on the position and orientation of the object to be located, and then only the features of the second objects within the search area are compared with those of the first object. In the case of a vehicle, the current position and orientation of the vehicle can be determined based on the position sensors (such as satellite positioning sensors) and orientation sensors (such as accelerometers and geomagnetic field sensors) on the vehicle, and then a sector area within a predetermined range centered on the current position of the vehicle can be used as the search area. The angle range of the sector area can be determined based on the current orientation of the vehicle, for example, it can be a predetermined angle range that includes the current orientation of the vehicle. Alternatively, the angle range of the sector area can be determined based on the current orientation of the vehicle and the scanning range of the vehicle's environmental sensors. For example, if the scanning range of the lidar is from 45 degrees on the left side to 45 degrees on the right side in front of the vehicle, the angle range of the sector area can be determined to be 45 degrees on the left to 45 degrees on the right with respect to the current orientation of the vehicle.

It should be understood that the shape of the search area is not limited to the circle and sector described above, but can be any other suitable shape. For example, if the object to be located is a vehicle, the search area can be an area extending along the road where the vehicle is located.

In addition, in some embodiments of the present disclosure, if the search tree is generated from the map data of a small region, the property of the nodes of the search tree may not include position and/or orientation. During the search, the search tree is searched for features of the second object similar to those of the first object based on the features of the first object.

The similarity between the features of each second object and those of the first object can be calculated, and the similarity can be used to determine whether the features of the second object are similar to those of the first object. For example, when the similarity is greater than a predetermined threshold, it can be determined that the features of the second object are similar to those of the first object.

In some examples, the features of the object to be located can be constructed as a vector that includes multiple attributes of the object. In this way, when determining the similarity of features, the metric for determining the similarity of the vector, such as the distance, can be used to match the features.

In some cases, it is possible that the features of one first object in a search result are similar to features of multiple second objects. That is, it is found in the search tree that multiple second objects have features similar to those of the first object. It is also possible in the search result that the features of multiple first objects are similar to those of a second object. Or, it is possible in the search result that the features of one first object are only similar to those of one second object.

If the features of one first object in the search result are only similar to those of one second object, the second object can be directly used as the object (i.e., the third object) corresponding to the first object.

If the features of one first object in the search result are similar to those of multiple second objects, or the features of multiple first objects are similar to those of one second object, there is a need to further determine the second object corresponding to the first object.

In some embodiments of the present disclosure, based on the search result, the similarity between the probability distribution model of each first object and the probability distribution model of a second object with similar features can be further calculated. For example, Euclidean distance can be used as a metric for determining the similarity of the probability distribution models.

In some embodiments of the present disclosure, possible correspondence relationship between the first object and the second object can be established based on the search result. For example, in the search result, the features of the first object a are similar to those of the second object A and the second object B, and the features of the first object b are similar to those of the second object A and the second object B. The correspondence relationship between the first objects a and b and the second objects A and B can be determined as shown in Fig. 5A - Fig. 5F.

The correspondence relationship shown in Fig. 5A is:

The first object a corresponds to the second object A; and
The first object b corresponds to the second object B.

The correspondence relationship shown in Fig. 5B is:

The first object a corresponds to the second objects A and B; and
The first object b has no corresponding second object.

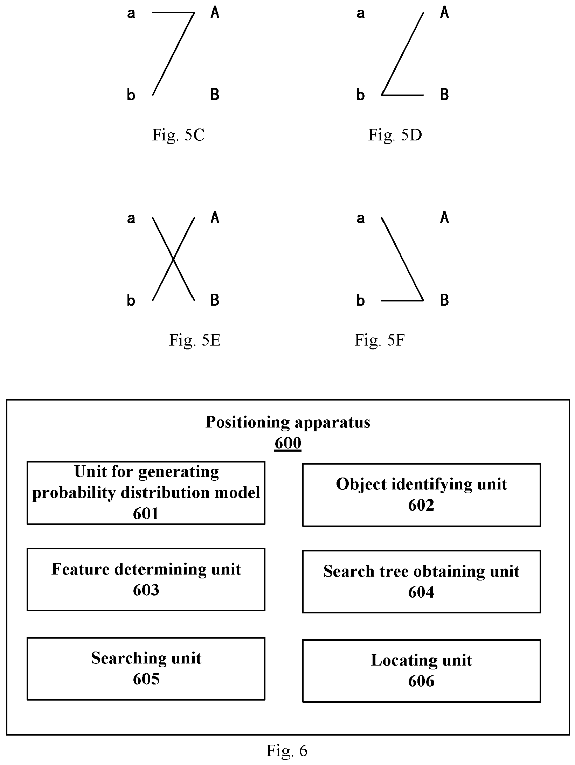

The correspondence relationship shown in Fig. 5C is:

The first object a corresponds to the second object A; and
The first object b corresponds to the second object A.

The correspondence relationship shown in Fig. 5D is:

The first object a has no corresponding second object; and
The first object b corresponds to the second objects A and B.

The correspondence relationship shown in Fig. 5E is:

The first object a corresponds to the second object B; and
The first object b corresponds to the second object A.

The correspondence relationship shown in Fig. 5F is:

The first object a corresponds to the second object B; and
The first object b corresponds to the second object B.

Based on the possible correspondence relationships listed above, the sum of similarities between the first object and the second object in each correspondence relationship is calculated, the correspondence relationship with the minimum sum of similarities is selected, and the object (i.e., the third object) in the second object corresponding to the first object is determined according to the selected correspondence relationship.

It should be understood that the metric of the similarity is not limited to the above Euclidean distance, but other metrics can be used, such as the Manhattan distance.

Finally, the position of the object to be located can be determined based on the determined third object (step 106). When the third object corresponding to the first object is determined in above step 104, it can be assumed that the first object sensed by the environmental sensors on the object to be located is the third object in the map data. In this way, the accurate position of the third object can be obtained from the map data. In addition, the accurate relative position (equivalent to the relative position relative to the third object) of the object to be located relative to the first object can also be obtained through the environment sensors. Based on the accurate position of the third object and the relative position of the object to be located, the accurate position of the object to be located can be obtained.

A positioning apparatus is also provided in accordance with an embodiment of the present disclosure. The positioning apparatus can be an on-board computer of an vehicle, for example. The positioning apparatus can include storage and a processor coupled to the storage. Instructions that can be executed by the processor are stored in the storage. When the processor executes the instructions, the positioning apparatus can implement the positioning method described above with reference to Fig. 1 to determine the position of the object to be located.

Fig. 6 shows a schematic diagram of a positioning apparatus 600 according to an embodiment of the present disclosure. The positioning apparatus 600 includes a unit 601 for generating a probability distribution model, an object identifying unit 602, a feature determining unit 603, a search tree obtaining unit 604, a search unit 605, and a locating unit 606.

The object identifying unit 602 can perform clustering on the sensing data of an environment near the object to be located to identify at least one first object based on the result of the clustering. The unit 601 for generating a probability distribution model can generate a probability distribution model for each first object based on the sensing data of the environment near the object to be located. The feature determining unit 603 can determine features corresponding to the first objects based on the sensing data.

The search tree obtaining unit 604 can obtain the search tree. The properties of a node of the search tree comprise the features of at least one second object near the object to be located, where the features of the at least one second object are generated from the map data. For example, in some embodiments of the present disclosure, the search tree obtaining unit 604 can obtain the search tree from a remote server over a wired or wireless network. In addition, in some embodiments of the present disclosure, the search tree obtaining unit 604 may include a search tree generation unit. The search tree generation unit can generate a search tree from the map data.

The searching unit 605 can determine the third object that corresponds to the first object from the second object based on the search tree. For example, the search unit 605 may search the search tree based on the features of the first object to determine the second object whose features match those of the first object. If there is only one matching second object for each first object, the matching second object can be directly used as the third object corresponding to the first object. If there are multiple matching second objects for some first objects, the search unit 605 can further calculate the sum of similarities based on the possible correspondence relationships between the first object and the second object, select the correspondence relationship with the smallest sum of similarities, and determine the object corresponding to the first object (i.e., the third object) from the second object according to the selected correspondence relationship.

The locating unit 606 can determine the position of the object to be located according to the third object.

According to some embodiments of the present disclosure, the positioning apparatus 600 can be mounted on a vehicle. In this way, the vehicle can know the exact position of the vehicle through the positioning apparatus 600 during the driving.

A non-transient computer readable storage medium with instructions stored thereon is provided in accordance with some embodiments of the present disclosure. When the instructions are executed by the processor of the computer, the computer may implement the above positioning method according to the present disclosure.

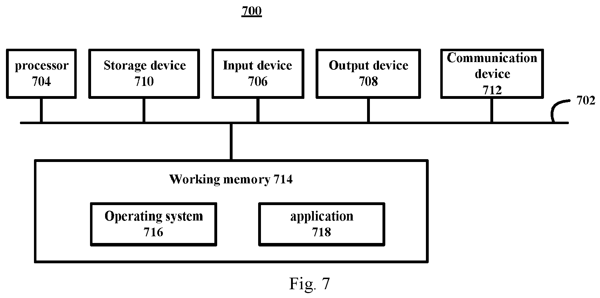

Fig. 7 shows a block diagram of a computing device which is an example of the hardware that can be applied to various aspects of the present disclosure.

Referring to Fig. 7, a computing device 700 will now be described, which is an example of a hardware that can be applied to various aspects of the disclosure. Computing device 700 can be any machine configured for processing and/or computing. It can be, but is not limited to, a workstation, a server, a desktop computer, a laptop, a tablet, a personal digital assistant, a smart phone, an on-board computer of a vehicle, or any combination of them. The aforementioned devices/servers/client devices can be implemented wholly or at least partially by the computing device 700 or a similar device or system.

The computing device 700 can include components that may connect to or communicate with bus 702 through one or more interfaces. For example, a computing device 700 can include bus 702, one or more processors 704, one or more input devices 706, and one or more output devices 708. The one or more processors 704 may be any type of processor and may include, but are not limited to, one or more general purpose processors and/or one or more dedicated processors (such as dedicated processing chips). The input device 706 can be any type of device that can input information to the computing device and can include, but not limited to, a mouse, a keyboard, a touch screen, a microphone, and/or a remote controller. The output device 708 can be any type of device capable of presenting information and can include, but not limited to, a displays, a speaker, a video/audio output terminal, a vibrator, and/or a printer. The computing device 700 may also include a non-transient storage device 710 or is connected to the non-transient storage device. The non-transient storage device may be any storage device that is non-transient and capable of storing data. The non-transient storage device may include, but is not limited to, a magnetic disk drive, an optical storage device, a solid-state storage, a floppy disk, a floppy magnetic disk, a hard disk, a tape or any other magnetic media, a optical disc or any other optical media, a ROM (read-only memory), a RAM (random access memory), a cache and/or any memory chip or cassette tape, and/or any other media from which the computer can read data, instructions and/or code. The non-transient storage device 710 can be detached from the interface. The non-transient storage device 710 may have data/instructions/code for implementing the above methods and steps. The computing device 700 can also include a communication device 712. The communication device 712 can be any type of device or system capable of communicating with an internal device and/or network communication and may include, but not limited to, a modem, a network card, an infrared communication device, a wireless communication device, and/or a chipset, such as a Bluetooth™ device, a 1302.11 device, a WiFi device, a WiMax device, a cellular communication device, and/or similar devices.

When the computing device 700 is used as an on-board device of a vehicle, it can also be connected to external devices, such as GPS receivers, sensors that sense different environmental data (such as acceleration sensors, wheel speed sensors, gyroscopes, etc.). In this way, a computing device 700, for example, receives positioning data and sensor data indicating the driving condition of a vehicle. When the computing device 700 is used as an on-board device of a vehicle, it can also be connected to other devices (such as engine systems, wiper systems, anti-lock braking systems, etc.) that control the movement and operation of the vehicle.

In addition, the non-transient storage device 710 can have map information and software components, so processor 704 can implement route guidance processing. In addition, the output device 706 can include displays for displaying maps, position markers for vehicles, and images showing the driving conditions of the vehicle. The output device 706 can also include a speaker or a headphone connector for audio output.

The bus 702 can include, but is not limited to, the industrial standard architecture (ISA) bus, the micro channel architecture (MCA) bus, the enhanced ISA (EISA) bus, the Video Electronics Standards Association (VESA) local bus, and the peripheral component interconnect (PCI) bus. In particular, for an on-board device of a vehicle, the bus 702 can also include a controller area network (CAN) bus or other structures designed for use in the vehicle.

The computing device 700 can also include a working memory 714, which can be any type of working memory capable of storing instructions and/or data that facilitate the work of the processor 704 and can include, but not limited to, the random access memory and/or the read-only storage devices.

Software components can be located in the working memory 714 and include, but are not limited to, operating system 716, one or more applications 718, drivers, and/or other data and codes. Instructions for implementing the methods and steps described above can be contained in one or more applications 718, and the modules/units/components of the above apparatus/server/client device can be implemented by the processor 704 reading and executing the instructions of the one or more applications 718.

It should also be recognized that changes can be made to meet specific needs. For example, custom hardware can also be used, and/or specific components can be implemented in hardware, software, firmware, middleware, microcode, hardware description language, or any combination thereof. In addition, connections can be made to other computing devices, such as network input/output devices. For example, some or all of the disclosed methods and devices can be implemented by programming hardware (such as programmable logic circuits including field programmable gate arrays (FPGA) and/or programmable logic arrays (PLA)) with an assembly language or hardware programming language (such as VERILOG, VHDL, C++), according to the logics and algorithms of the present disclosure.

Although various aspects of the present disclosure have so far been described with reference to the drawings, the above methods, systems and apparatuses are only examples, and the scope of the present disclosure is not limited to these aspects, but only to the attached claims and their equivalents. Various components can be omitted or replaced by equivalent components. The steps may also be implemented in a different sequence than the sequence described in the present disclosure. In addition, various components can be combined in various ways. It is also important that, with the development of technology, many of the components can be replaced by equivalent components that appear after the present disclosure.

**Claims**

1. A positioning method including:

   performing clustering on sensing data on an environment near an object to be located so that at least one first object is identified;
   generating a probability distribution model for each of the first object according to the sensing data;
   determining a feature corresponding to the at least one first object according to the sensing data;
   obtaining a search tree, wherein a property of a node of the search tree includes a feature of at least one second object near the object to be located, and the feature of the at least one second object is generated based on a map data;
   determining a third object corresponding to the at least one first object from the at least one second object according to the search tree; and
   determining a position of the object to be located according to the third object.

2. The positioning method according to claim 1, wherein the probability distribution model includes a Poisson distribution model, a Bernoulli distribution model, a Laplace distribution model, and a Gaussian mixture model.

3. The positioning method according to claim 1, wherein the feature includes a type, a shape, a reflectivity, a flatness, a size, a color, and a texture.

4. The positioning method according to claim 1, wherein the probability distribution model is a Gaussian mixture model, and the feature is a signature.

5. The positioning method according to claim 1, wherein the search tree is a binary tree.

6. The positioning method according to claim 5, wherein the search tree is a k-dimensional tree, and k is an integer greater than or equal to 1.

7. The positioning method according to claim 1, wherein the sensing data comprises a point cloud of an environment around the object to be located that is obtained by an environmental sensor on the object to be located.

8. The positioning method according to claim 7, wherein the environmental sensor includes at least one of a lidar and a camera.

9. The positioning method according to claim 1, wherein the property of the node of the search tree comprises the feature of the at least one second object within a predetermined range.

10. The positioning method according to claim 1, wherein the property of the node of the search tree comprises a position and/or an orientation of the at least one second object.

11. The positioning method according to claim 9, further comprising:
determining the predetermined range according to a current position of the object to be located.

12. The positioning method according to claim 11, further comprising:

updating the current position of the object to be located;
determining that the updated current position of the object to be located is out of the predetermined range;
obtain a new search tree based on the updated current location of the object to be located.

13. The positioning method according to claim 9, further comprising:
determining the predetermined range according to navigation information.

14. The positioning method according to claim 13, wherein the navigation information includes at least one of the following: a starting point, an end point, a passing point and a planning path.

15. The positioning method according to claim 1, wherein determining a third object corresponding to the at least one first object from the at least one second object according to the search tree includes
searching, in the search tree, for one or more features similar to the feature of at least one first object near the object to be located;
calculating a similarity between the one or more features and the feature of the at least one first object near the object to be located; and
determining the third object corresponding to the at least one first object from the at least one second object according to the similarity.

16. A positioning apparatus, including a memory and a processor, wherein instructions are stored on the memory, when the instructions are executed by the processor, steps of the positioning method of any one of claims 1 to 15 are implemented.

17. A positioning apparatus, including
an object identifying unit, configured to perform clustering on sensing data of an environment near an object to be located to identify at least one first object;
a unit for generating a probability distribution model, configured to generate a probability distribution model for each of the first object according to the sensing data;
a feature determining unit, configured to determine a feature corresponding to the at least one first object according to the sensing data;
a search tree obtaining unit, configured to obtain a search tree, wherein a property of a node of the search tree includes a feature of at least one second object near the object to be located, and the feature of the at least one second object is generated based on a map data;
a searching unit, configured to determine a third object corresponding to the at least one first object from the at least one second object according to the search tree; and
a locating unit, configured to determining a position of the object to be located according to the third object.

18. A vehicle, comprising the positioning apparatus according to claim 16 or claim 17.

19. A non-transient computer readable storage medium with instructions stored thereon, when the instructions are executed, the steps of the positioning method according to any one of claims 1 to 15 are implemented.

Perform clustering on the sensing data to identify the first objecct — 101

Generating a probability distribution model for each first object according to the sensing data — 102

Determining a feature of the first object — 103

Obtaining the search tree — 104

Determining the third object according to the search tree — 105

Determining the position of the object to be located according to the third object — 106

FIG. 1

201

50

Fig. 2

Fig. 3

401

402

Fig. 4

a ——— A          a          A
                              
b ——— B          b          B

Fig. 5A                Fig. 5B

Fig. 5C

Fig. 5D

Fig. 5E

Fig. 5F

**Positioning apparatus**
**600**

| Unit for generating probability distribution model 601 | Object identifying unit 602 |
| --- | --- |
| Feature determining unit 603 | Search tree obtaining unit 604 |
| Searching unit 605 | Locating unit 606 |

Fig. 6

700

| processor 704 | Storage device 710 | Input device 706 | Output device 708 | Communication device 712 |
|---|---|---|---|---|

702

| Working memory 714 |
|---|
| Operating system 716 | application 718 |

Fig. 7

Europäisches
Patentamt

European
Patent Office

Office européen
des brevets

**EUROPEAN SEARCH REPORT**

Application Number

EP 21 18 5653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/165544 A1 (ISERT CARSTEN [DE] ET AL) 14 June 2018 (2018-06-14) * abstract * * claims 21,24,25 * * paragraph [0006] - paragraph [0008] * * paragraph [0026] - paragraph [0027] * * paragraph [0031] * * paragraph [0043] * * paragraph [0059] - paragraph [0060] * * paragraph [0065] * * paragraph [0072] * | 1-19 | INV. G06K9/00 G06K9/62 G01S17/89 G06T17/00 |
| A | US 2020/166346 A1 (DOEMLING MAXIMILIAN [CN] ET AL) 28 May 2020 (2020-05-28) * the whole document * | 1-19 | |
| A | US 2020/202107 A1 (OZKUCUR NEZIH ERGIN [US] ET AL) 25 June 2020 (2020-06-25) * the whole document * | 1-19 | |
| A | NAGY BALÁZS ET AL: "Real-Time Point Cloud Alignment for Vehicle Localization in a High Resolution 3D Map", 23 January 2019 (2019-01-23), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 226 - 239, XP047501115, ISBN: 978-3-319-10403-4 [retrieved on 2019-01-23] * the whole document * | 1-19 | TECHNICAL FIELDS SEARCHED (IPC) G06K G01S G06T |

The present search report has been drawn up for all claims

| Place of search | Date of completion of the search | Examiner |
|---|---|---|
| The Hague | 1 December 2021 | Martinez, Francis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 18 5653

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2021

| Patent document cited in search report | Publication date | Patent family member(s) | Publication date |
|---|---|---|---|
| US 2018165544 A1 | 14-06-2018 | CN 107709930 A<br>EP 3311110 A1<br>US 2018165544 A1<br>WO 2016201670 A1 | 16-02-2018<br>25-04-2018<br>14-06-2018<br>22-12-2016 |
| US 2020166346 A1 | 28-05-2020 | CN 110770540 A<br>EP 3631362 A1<br>US 2020166346 A1<br>WO 2018218506 A1 | 07-02-2020<br>08-04-2020<br>28-05-2020<br>06-12-2018 |
| US 2020202107 A1 | 25-06-2020 | EP 3674662 A1<br>US 2020202107 A1<br>US 2021042500 A1 | 01-07-2020<br>25-06-2020<br>11-02-2021 |

EPO FORM P0459

For more details about this annex : see Official Journal of the European Patent Office, No. 12/82